# EUROPEAN PATENT APPLICATION

(11) **EP 4 592 900 A2**
(43) Date of publication of application: **30.07.2025**
(21) Application number: 25152092.0
(22) Date of filing: 15.01.2025
(51) Int. Cl.: G06N 3/063, G06N 3/0495

(54) **ACCELERATOR CONFIGURED TO PERFORM ARTIFICIAL INTELLIGENCE COMPUTATION, OPERATION METHOD OF ACCELERATOR, AND ARTIFICIAL INTELLIGENCE SYSTEM INCLUDING ACCELERATOR**

(30) Priority: 24.01.2024 KR 20240010718; 13.01.2025 US 202519018648
(71) Applicant: Samsung Electronics Co., Ltd., Suwon-si, Gyeonggi-do 16677 (KR); Naver Corporation, Seongnam-si, Gyeonggi-do 13561 (KR)
(72) Inventor: JANG, Jae Hun, 16677 Suwon-si (KR); JEON, Younho, 16677 Suwon-si (KR); KIM, Jaeju, 16677 Suwon-si (KR); SON, Hong Rak, 16677 Suwon-si (KR); SHIN, Dong-Min, 16677 Suwon-si (KR); KWON, Sejung, 13561 Seongnam-si (KR); KIM, Byeonguk, 13561 Seongnam-si (KR); PARK, Baeseong, 13561 Seongnam-si (KR); RYU, Jiwon, 13561 Seongnam-si (KR); LEE, Dongsoo, 13561 Seongnam-si (KR)
(74) Representative: Marks & Clerk LLP

(57) **Abstract**

Disclosed is an accelerator performing an artificial intelligence (Al) computation, which includes a processing element that generates first result data by performing a first computation on first activation data and first weight data loaded from a memory, and a quantizer that generates first output data by performing a quantization on the first result data, and the first activation data, the first weight data, and the first output data are of a low precision type, the first result data is of a high precision type, and the first output data is stored in the memory.

## Description

### BACKGROUND

Embodiments of the present disclosure described herein relate to an artificial intelligence system, and more particularly, relate to an accelerator configured to perform artificial intelligence computations, an operation method of the accelerator, and an artificial intelligence system including the accelerator.

Recently, artificial intelligence (AI) is a field of computer science being widely used in various fields such as natural language understanding, natural language translation, robotics, artificial vision, problem solving, learning, knowledge acquisition, and cognitive science.

Artificial intelligence is implemented based on various algorithms. As an example, a neural network is composed of a complex network in which nodes and synapses are repeatedly connected. In the process of moving data from a current node to a next node, various signal processing may occur depending on the corresponding synapse, and this signal processing process is referred to as a 'layer'. In detail, the neural network may include various layers that are complexly connected to each other. Since the various layers included in the neural network require a large number of computations, various methods to optimize the computations are being studied. In other words, due to the large number of computations in even a single layer, even minute improvements to the optimization of the computations may have a significant impact on the speed, efficiency, power consumption, etc. of a multi-layer network.

### SUMMARY

Embodiments of the present disclosure provide an accelerator configured to perform artificial intelligence computations with reduced cost and improved performance, a method of operating the accelerator, and an artificial intelligence system including the accelerator.

According to at least one embodiment of the present disclosure, an accelerator for performing an artificial intelligence (AI) operation includes a processing element configured to generate first result data by performing a first operation on first activation data and first weight data loaded from a memory, and a quantizer configured to generate first output data by performing a quantization on the first result data, and wherein the first activation data, the first weight data, and the first output data are of a low precision type, the first result data is of a high precision type, and wherein the accelerator is configured to store the first output data in the memory and/or to enable the first output data to be stored in the memory.

According to at least one embodiment of the present disclosure, a method of operating an accelerator configured to perform an artificial intelligence (AI) operation includes loading first activation data and first weight data from a memory, generating first result data by performing a first operation based on the first activation data and the first weight data, performing a quantization on the first result data to generate first output data, and storing the first output data in the memory, and the first activation data, the first weight data, and the first output data are of a low precision type, and the first result data is of a high precision type.

According to at least one embodiment of the present disclosure, an artificial intelligence system includes a memory configured to store first activation data and first weight data, an accelerator configured to load the first activation data and the first weight data from the memory, perform a first computation on the first activation data and the first weight data to generate first result data, and generate first output data by performing a quantization on the first result data, and a CPU (Central Processing Unit) that controls the memory and the accelerator, and the first activation data, the first weight data, and the first output data are of a low precision type, the first result data is of a high precision type, and the first output data is stored in the memory.

At least some of the above and other features of the invention are set out in the claims.

### BRIEF DESCRIPTION OF THE FIGURES

The above and other objects and features of the present disclosure will become apparent by describing in detail embodiments thereof with reference to the accompanying drawings.
FIG. 1 is a block diagram illustrating a comparative system for processing an artificial intelligence model.
FIG. 2 is a block diagram illustrating a system, according to at least one embodiment of the present disclosure.
FIG. 3 is a conceptual diagram for describing a deep learning layer performed by an accelerator of FIG. 2.
FIG. 4 is a diagram for describing a concept of a MAC computation performed in an accelerator of FIG. 2.
FIG. 5 is a diagram for describing a quantization operation performed by a quantizer in an accelerator of FIG. 2.
FIG. 6 is a block diagram illustrating an accelerator of FIG. 2.
FIG. 7 is a block diagram illustrating a quantizer of FIG. 6.
FIG. 8 is a block diagram illustrating one of a plurality of quantization cores of FIG. 7.
FIG. 9 is a block diagram illustrating a converting circuit of FIG. 8.
FIG. 10 is a flowchart illustrating an operation of an accelerator of FIG. 2.
FIGS. 11A to 11C are diagrams for describing a quantization operation performed by a quantizer of FIG. 7.
FIG. 12 is a block diagram illustrating an accelerator of FIG. 2.
FIG. 13 is a diagram illustrating a structure of an accelerator, according to at least one embodiment of the present disclosure.
FIG. 14 is a diagram illustrating a structure of an accelerator, according to at least one embodiment of the present disclosure.
FIG. 15 is a block diagram illustrating a structure of an accelerator, according to at least one embodiment of the present disclosure.
FIG. 16 is a block diagram illustrating a system according to at least one embodiment of the present disclosure.
FIG. 17 is a block diagram illustrating a system according to at least one embodiment of the present disclosure.

### DETAILED DESCRIPTION

Hereinafter, embodiments of the present disclosure may be described in detail and clearly to such an extent that an ordinary one in the art easily implements the present disclosure.

The terms "unit", "module", "-or/-er", etc. used in description or drawings in the specification or function blocks illustrated in drawings may be implemented in the form of processing circuitry including software, hardware, or a combination thereof configured to perform specific functions. As an example, a "computing module" may be a hardware circuit configured to perform the corresponding function or computations described herein. Additionally, the processing circuitry more specifically may include, but is not limited to, a central processing unit (CPU), an arithmetic logic unit (ALU), a digital signal processor, a microcomputer, a field programmable gate array (FPGA), a System-on-Chip, (SoC), a programmable logic unit, a microprocessor, application-specific integrated circuit (ASIC), etc. and/or may include active and/or passive electrical components such as transistors, resistors, capacitors, etc., and/or electronic circuits including one or more of said components.

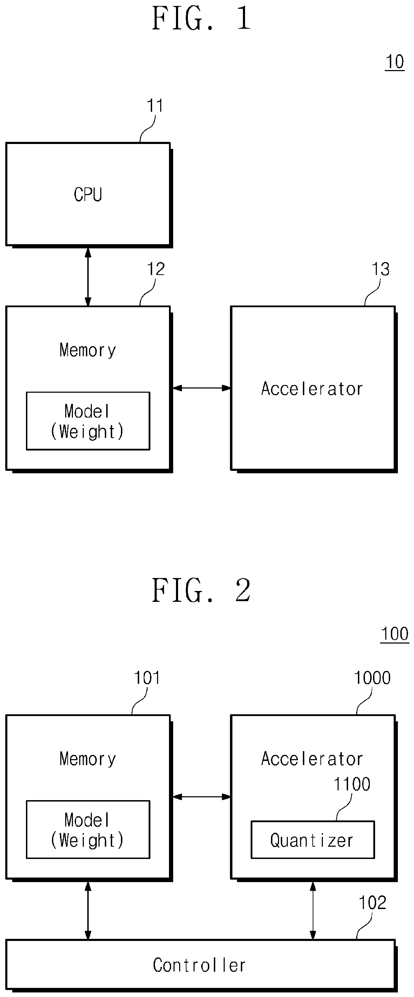

FIG. 1 is a block diagram illustrating a comparative system for processing an artificial intelligence model. Referring to FIG. 1, a system 10 may include a central processing unit (CPU) 11, a memory 12, and an accelerator 13. The CPU 11 may be configured to control the overall operations of the system. The memory 12 may be configured to store information, such as a variety of information for the operation of the system. The accelerator 13 may be configured to perform various learning and/or inferences using the artificial intelligence model stored in the memory 12 under the control of the CPU 11.

The accelerator 13 may be configured to use the artificial intelligence model (e.g., weights) stored in the memory 12 to perform learning and/or inference on the artificial intelligence model. For example, the accelerator 13 may be configured to perform repetitive multiplication and addition computations on inputs (e.g., activation and weight) to perform a learning operation or an inference operation based on the artificial intelligence model. In this case, the inputs (e.g., activations and weights), intermediate computation values, and/or computation results of the accelerator 13 are stored in the memory 12, and the accelerator 13 repeatedly accesses the memory 12, to perform learning or inference. In this case, when the size of data stored in the memory 12 is large, large bandwidth and large capacity are required in the memory 12. Additionally, due to limitations in memory bandwidth, a computation speed of the accelerator 13 may decrease and/or power consumed in the memory 12 may increase when the size of data transferred between the accelerator 13 and the memory 12 is large.

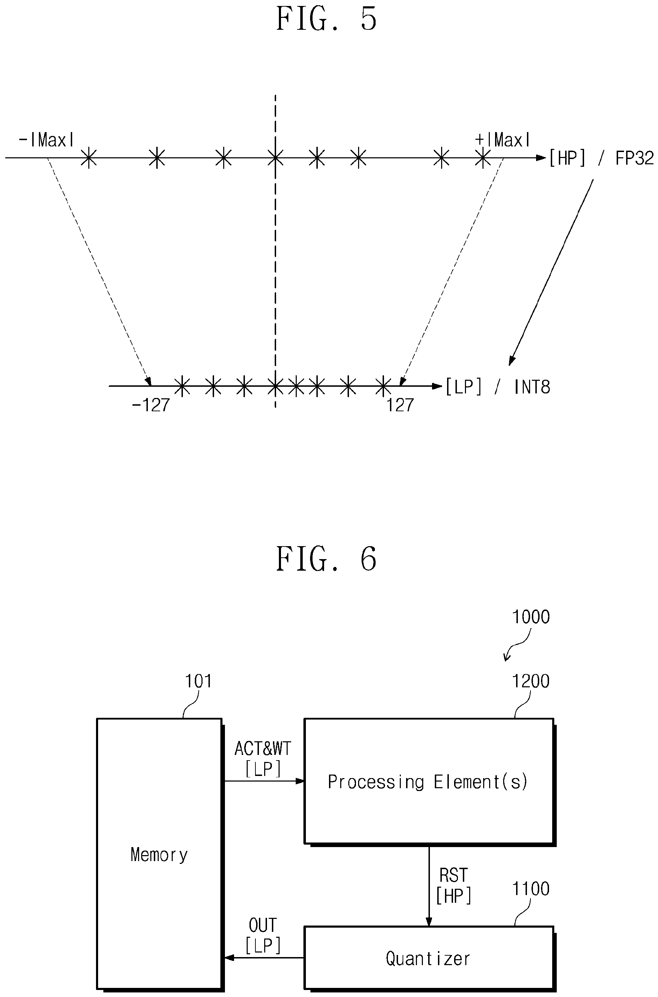

The artificial intelligence model (or weights) stored in the memory 12 may be quantized by the CPU 11 after learning is completed. The quantization may refer to the operation of converting relatively high precision data into relatively low precision data. For example, first data may have a value expressed as floating point-32 (FP32) (e.g. as single-precision floating-point format, making use of 32 bits). In this case, the quantization is performed on first data, so that the first data may be converted to a value expressed as Int-8 (Integer-8) (e.g. as an integer stored with 8-bits). The quantization will be described in more detail with reference to FIG. 5. When the artificial intelligence model (or weights) is quantized, the capacity (e.g. size) of data related to the artificial intelligence model may be decreased.

As described above, the artificial intelligence model (or weights) stored in the memory 12 may be quantized by the CPU 11, so that data related to the artificial intelligence model may occupy relatively less capacity. Accordingly, the speed at which the accelerator 13 accesses the artificial intelligence model (or weights) may be improved and/or power consumption for accessing the memory 12 may be reduced. However, when the accelerator 13 performs inference on the artificial intelligence model, the computation result and/or intermediate computation value output from the accelerator 13 may be data with relatively high precision. The computation results and/or the intermediate computation values may be used as input with respect to a subsequent layer of the accelerator. In detail, since the accelerator 13 repeatedly accesses data with relatively high precision and/or large capacity from the memory 12, high bandwidth and large capacity are still required for the memory 12 even in cases wherein the data is quantized, and accordingly the power consumption used in the memory 12 increases. Accordingly, the cost to implement the system 10 increases and/or the performance of the system 10 deteriorates.

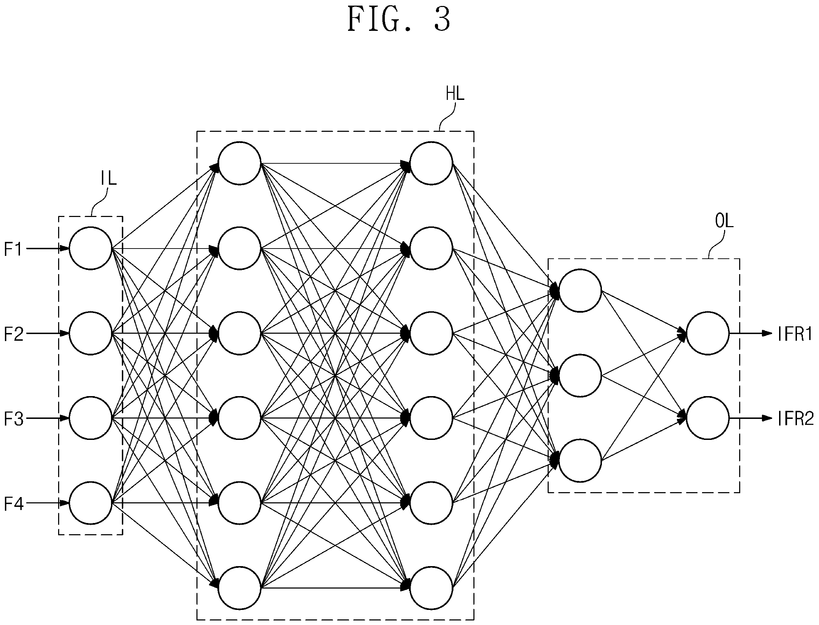

FIG. 2 is a block diagram illustrating a system, according to at least one embodiment of the present disclosure. FIG. 3 is a conceptual diagram for describing a deep learning layer performed by an accelerator of FIG. 2. Referring to FIGS. 2 and 3, a system 100 may include a memory 101, a controller 102, and an accelerator 1000. In at least one embodiment, the system 100 may be dedicated hardware configured to process artificial intelligence models. For example, the system 100 may be (or be included in) a graphics processing unit (GPU), a neural processing unit (NPU), and/or separate dedicated hardware. In at least one embodiment, the system 100 may be included in an application processor (AP), in a data server, in a mobile device, etc.

In at least one embodiment, the artificial intelligence model driven by the system 100 may be created and/or updated through machine learning. The machine learning may include various learning methods such as a supervised learning, an unsupervised learning, a semi-supervised learning, and a reinforcement learning, but the scope of the present disclosure is not limited thereto.

In at least one embodiment, the artificial intelligence model may be generated or trained through one or a combination of at least two of various neural networks such as a deep neural network (DNN), a convolutional neural network (CNN), a recurrent neural network (RNN), a restricted boltzmann machine (RBM), a deep belief network (DBN), a bidirectional recurrent deep neural network (BRDNN), a deep Q-network, etc. The artificial intelligence model may include a plurality of neural network layers, and each of the plurality of neural network layers may be configured to perform an artificial intelligence computation based on a learned model or weight. In at least some embodiments, for example, the system 10 may be applied to a smartphone performing voice recognition, image recognition, image classification, and image processing by using a neural network, a tablet device, a smart TV, an augmented reality (AR) device, an Internet of things (IoT) device, a self-driving vehicle, robots, a medical device, a drone, an advanced drivers assistance system (ADAS), an image display device, a data processing server, a measuring device, etc. and/or may be mounted in one of various kinds of electronic devices.

Hereinafter, to easily describe embodiments of the present disclosure, the term "artificial intelligence computation" is used. The "artificial intelligence computation" may collectively refer to various computations performed within the system 100 in order for the system 100 to train an artificial intelligence model and/or to infer a certain result. As an example, the artificial intelligence computation may include a multiply and accumulate (MAC) computation performed in various layers of an artificial intelligence model.

For example, as illustrated in FIG. 3, the system 100 may operate based on a deep neural network. The deep neural network may include an input layer IL, a hidden layer HL, and an output layer OL. The input layer IL may be configured to receive input data or input features F1 to F4. The input features F1 to F4 received through the input layer IL may be computed (e.g., weight multiplication) based on the corresponding weight, and the result may be transferred to the subsequent layer (e.g., the hidden layer HL). The hidden layer HL may include one or more layers, and may be configured to perform weight multiplication on various inputs and to accumulate the results. The results of the hidden layer HL may be provided to the output layer OL. The output layer OL may perform multiplication or accumulation of the results of the hidden layer HL and may output inference results IFR1 and IFR2. As described above, a deep neural network may repeatedly perform multiply and accumulate (MAC) computations on the input data and weights. However, the scope of the present disclosure is not limited thereto, and the system 100 may be configured to perform various computations. In addition, whilst the deep neural network of FIG. 3 has a particular number of inputs, outputs, layers and nodes, it will be appreciated that this is just one example of a deep neural network, and that the number of inputs, outputs, layers and nodes may be varied.

The memory 101 may be configured to store various data, weights, parameters, etc. used in the artificial intelligence computation performed by the system 100. For example, the memory 101 may store an artificial intelligence model for artificial intelligence computations of the system 100. The artificial intelligence model may include various weight information. In at least one embodiment, the memory 101 may be a dynamic random access memory (DRAM). However, the scope of the present disclosure is not limited thereto, and the memory 101 may include various types of memories such as a static RAM (SRAM), a phase-change RAM (PRAM), a magnetoresistive RAM (MRAM), a resistance RAM (RRAM), a ferroelectric RAM (FRAM), a flash memory, etc.

The accelerator 1000 may be configured to perform the artificial intelligence computation using data, weights, and/or parameters stored in the memory 101. In at least one embodiment, the accelerator 1000 may include a plurality of processing elements PEs configured to perform the artificial intelligence computation. For example, each of the plurality of processing elements may be configured to perform the multiply and accumulate (MAC) computations on data, weights, or parameters stored in the memory 101. The artificial intelligence model may be trained or a specific result may be inferred based on the computation results of the plurality of processing elements.

The controller 102 may be configured to control the memory 101 and the accelerator 1000. In at least one embodiment, the controller 102 may be a central processing unit (CPU) configured to control overall operations of the system 100.

In at least one embodiment, as described with reference to FIG. 1, the artificial intelligence model (or weights) stored in the memory 101 may be quantized by the CPU 11. In contrast, the accelerator 1000 may perform computations based on data types (with relatively high accuracy) to improve the accuracy of artificial intelligence inference. In this case, the computation results and/or the intermediate computation values determined by the accelerator 1000 may be a data type with relatively high precision. In this case, similar to as described with reference to FIG. 1, the computation results or the intermediate computation values of the accelerator 1000 is stored in the memory 101, so memory access speed may decrease and/or power consumption may increase.

Additionally, the accelerator 1000 according to at least one embodiment of the present disclosure may include a quantizer 1100. The quantizer 1100 may be configured to perform quantization on the intermediate computation values and/or the computation results of the accelerator 1000. Therefore, the accelerator 1000 may be configured to perform the quantization on the intermediate computation values and/or the computation results generated while performing the artificial intelligence computation and/or during the inference process. In this case, since the intermediate computation values and/or the computation results is quantized the capacity of the intermediate computation values and/or the computation results stored in the memory 101 is reduced and therefore, the bandwidth and capacity required for the memory 101 may also be reduced. Additionally, since the intermediate computation values and/or the computation results are quantized the power consumption used in the memory 101 may be reduced. Accordingly, the implementation cost of the system 100 may be reduced or the performance of the system 100 may be improved.

As an example, in the inference of artificial intelligence systems with respect to the recent large language models such as Chat-GPT, large amounts of data are loaded or stored from the memory. In this case, when memory resources are limited, a bottleneck associated with memory access may occur. This causes a decrease in the overall performance of the artificial intelligence system. In contrast, according to the present disclosure, as quantization is performed on computation result data and/or subsequent activation data inside the accelerator (e.g., by the quantizer included in the accelerator) the overall capacity of data stored in and/or loaded from the memory is reduced. Accordingly, the impact of potential bottlenecks in limited memory resources may be reduced and/or avoided, and an accelerator and/or an artificial intelligence system with improved performance and reduced cost is provided.

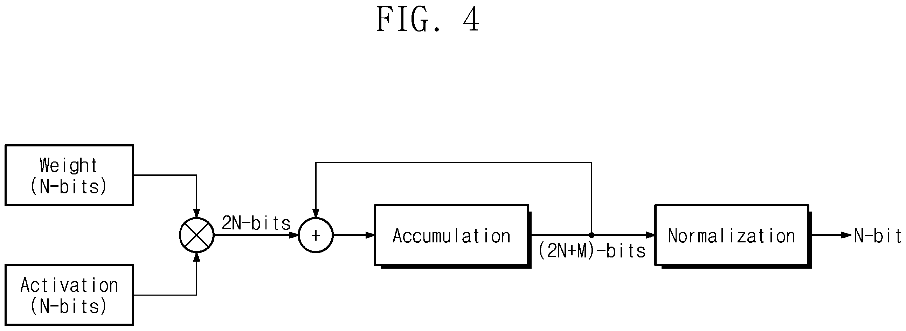

FIG. 4 is a diagram for describing a concept of a MAC computation performed in an accelerator of FIG. 2. In at least one embodiment, the MAC computation may include one multiplication computation and one accumulation computation with respect to two pieces of data.

For example, as illustrated in FIG. 4, a multiplication may be performed on a weight of N-bits and an activation of N-bits, wherein N is an integer. In this case, the multiplication result has a size of 2N-bits. Thereafter, as the multiplication result is accumulated, the accumulated result may have a size of (2N+M)-bits, wherein M is an integer. When the size of the accumulated result increases, the memory capacity for storing the accumulated result increases, therefore, it is beneficial to reduce the size of the accumulated result. Accordingly, the accumulated result may be normalized to an output data of N-bits. The normalized output data may be stored again in the memory 101. The output data stored in the memory 101 may be used to activate subsequent MAC computations.

In at least one embodiment, data in MAC computations may have various data types. For example, the data in the MAC computations may be of an integer type. Alternatively, the data of the MAC computations may be of a floating point type. The floating point type expresses data in the form of a sign, fraction, and exponent. In the floating point type, there are methods such as 32-bit single precision and 64-bit double precision. Depending on the type of data, size of data, etc., the accuracy of computation results, area of hardware structure, and power consumption may change. Accordingly, the type and size of data may be determined in various ways depending on the purpose of the system 100.

In at least one embodiment, the MAC computation is performed based on floating point type. In this case, the input data (e.g., weights and activations) and output data (e.g., MAC computation results) have floating point types. As described previously, floating point types have relatively high precision, but require a relatively large number of bits to express one piece of information. In this case, when loading input data from the memory 101 or storing output data in the memory 101, power consumption increases and/or a relatively longer time is required. However, the example embodiments are not limited thereto.

According to at least one embodiment of the present disclosure, the accelerator 1000 includes the quantizer 1100, and the quantizer 1100 is configured to perform quantization on output data to express the output data with a relatively smaller number of bits. The output data with a relatively smaller number of bits are stored in the memory 101, and the output data stored in the memory 101 may be loaded into the accelerator 1000 as an activation of the subsequent MAC computation. In detail, the quantizer 1100 of the accelerator 1000 performs quantization on the intermediate computation values and/or the computation results generated during the artificial intelligence computation process of the accelerator 1000, thereby reducing the size of the information stored in the memory 101. Accordingly, the overall performance of the system 100 may be improved and/or power consumption may be reduced.

FIG. 5 is a diagram for describing a quantization operation performed by a quantizer in an accelerator of FIG. 2. Referring to FIG. 5, data may be expressed in various manners. For example, data may be expressed as a high precision type HP (e.g. at a first level of precision). In at least one embodiment, a high precision type may refer to a floating point type that represents data in the form of a sign, fraction, and exponent. Alternatively, the data may be expressed as a low precision type LP (e.g. at a second level of precision that is lower than the first level of precision). In at least one embodiment, the low precision type LP may refer to an integer type that represents data in integer form. In at least one embodiment, compared to the high precision type HP, the low precision type LP may be expressed with a relatively small number of bits with respect to one piece of data, but may have relatively low precision. Generally, the low precision type LP may express data using fewer bits (e.g. at a lower precision) than the high precision type HP. It will be appreciated that the terms "low" and "high" in "low precision type" and "high precision type" are relative terms. That is, they need not imply any particular level of precision, other than the high precision type is higher precision than the low precision type.

In at least one embodiment, the high precision type HP may be expressed with a relatively large number of bits such as a Brain Floating Point Format BF16 type, a half-precision Floating Point Format FP16 type (e.g. a half-precision IEEE^{®} Floating Point Format FP16 type, such as according to the IEEE^{®} 754 standard), a single-precision floating-point format FP32 type, and a double-precision floating-point format FP64 type, and may include data types with relatively high precision. The low precision type LP may be expressed with a relatively small number of bits, such as INT4, INT8, INT16, etc., and may include data types with relatively low precision. In at least one embodiment, the low precision type LP may be implemented as a combination of integer data types such as an integer data type with width 4 (INT4 type), INT8 type, INT16 type, etc. and floating point data types such as BF16 type, FP16 type, FP32 type, etc., but may be expressed with a relatively small (e.g. smaller) number of bits compared to the high precision type HP. INT4, INT8 and INT16 may represent data as a signed integer stored with 4, 8 and 16 bits, respectively.

The quantizer 1100 may convert (or lighten) high precision type data into low precision type data. As an example, the quantizer 1100 may convert high precision type HP data into low precision type LP data. That is, the quantizer 1100 may convert data of a first precision type into data of a second precision type that is lower precision than the first precision type. In this case, the number of bits required to represent data may be reduced. In this case, since the capacity of data stored in and/or loaded from the memory 101 is reduced, the requirements for memory bandwidth and memory capacity may be reduced.

FIG. 6 is a block diagram illustrating an accelerator of FIG. 2. Referring to FIGS. 2 and 6, the accelerator 1000 may include the quantizer 1100 and a processing element 1200.

The processing element 1200 may be configured to load activation data ACT and weight data WT stored in the memory 101 and to perform artificial intelligence computations on the loaded activation data ACT and the loaded weight data WT. For example, the processing element 1200 may include processing circuitry configured to repeatedly perform the MAC computation on the activation data ACT and the weight data WT and may output computation result data RST.

In at least one embodiment, the processing element 1200 may perform the artificial intelligence (e.g. machine learning) computation based on the high precision type HP. For example, the processing element 1200 may perform the MAC computation on the activation data ACT and the weight data WT based on the FP16 type, which is a type of the high precision type HP. In this case, the computation result data RST output by the processing element 1200 will have the high precision type HP.

The quantizer 1100 may be configured to perform quantization on the computation result data RST of the processing element 1200 and to generate output data OUT. For example, as described above, the computation result data RST may be the high precision type HP. The quantizer 1100 may perform quantization on the computation result data RST of the high precision type HP and may generate the output data OUT of the low precision type LP. The output data OUT of the low precision type LP may be stored in the memory 101 (e.g. output to the memory 1010 for storage).

In at least one embodiment, as described with reference to FIG. 4, the accelerator 1000 repeatedly performs artificial intelligence computations through a plurality of layers. The output data OUT stored in the memory 101 may be used as an input (e.g., the activation data ACT) for the artificial intelligence computation with respect to the subsequent layer of the accelerator 1000. In this case, since the output data OUT stored in the memory 101 is the low precision type LP, the activation data ACT input to the processing element 1200 of the accelerator 1000 for artificial intelligence computation with respect to the subsequent layer will also be the low precision type LP.

As described above, the quantizer 1100 of the accelerator 1000 may perform quantization on the computation result data RST of the processing element 1200 to generate the output data OUT. The output data OUT is stored in the memory 101, and the output data OUT stored in the memory 101 may be used as an input (e.g.., the activation data ACT) with respect to the subsequent layer of the accelerator 1000. In this case, the data stored in and/or loaded from the memory 101 is the low precision type LP with a relatively small capacity, so the bandwidth and capacity required for the memory 101 may be reduced.

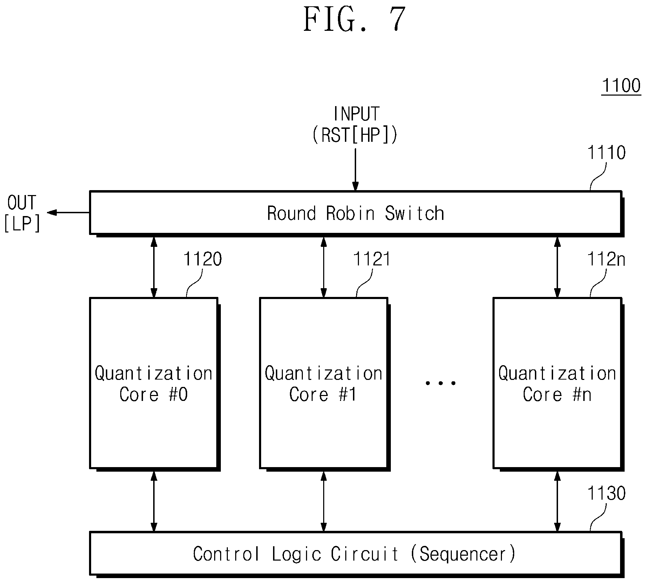

FIG. 7 is a block diagram illustrating a quantizer of FIG. 6. Referring to FIGS. 6 and 7, the quantizer 1100 may include a round robin switch 1110, a plurality of quantization cores 1120 to 112n, and a control logic circuit 1130.

The round robin switch 1110 may be configured to receive the computation result data RST as an input INPUT from the processing element 1200. In at least one embodiment, the computation result data RST (e.g., the input INPUT) may be the high precision type HP. The round robin switch 1110 may sequentially provide the computation result data RST to the plurality of quantization cores 1120 to 112n based on the round robin method. For example, each of the plurality of quantization cores 1120 to 112n may perform quantization on a predetermined number (e.g., `k') of data. In this case, the round robin switch 1110 may provide k computation results RST to each of the plurality of quantization cores 1120 to 112n in a round robin manner.

Each of the plurality of quantization cores 1120 to 112n may perform a quantization operation on input data. For example, each of the plurality of quantization cores 1120 to 112n may include various computation modules and/or computation units for performing the quantization operation on the input data. Each of the plurality of quantization cores 1120 to 112n may perform the quantization operation on the input data using computation modules and/or computation units to generate the output data OUT. The output data OUT may be the low precision type LP. The generated output data OUT may be provided to the round robin switch 1110. The round robin switch 1110 may output the output data OUT to the memory 101.

The control logic circuit 1130 may be configured to control each of the plurality of quantization cores 1120 to 112n. For example, each of the plurality of quantization cores 1120 to 112n may operate in parallel and/or independently. The control logic circuit 1130 may control an operation timing of each of the plurality of quantization cores 1120 to 112n.

Alternatively, each of the plurality of quantization cores 1120 to 112n may be configured to perform quantization based on various algorithms. Depending on the quantization algorithm performed in each of the plurality of quantization cores 1120 to 112n, the computation module and computation order executed in each of the plurality of quantization cores 1120 to 112n may vary. The control logic circuit 1130 may be configured to individually control the computation module of each of the plurality of quantization cores 1120 to 112n depending on the quantization algorithm performed in each of the plurality of quantization cores 1120 to 112n.

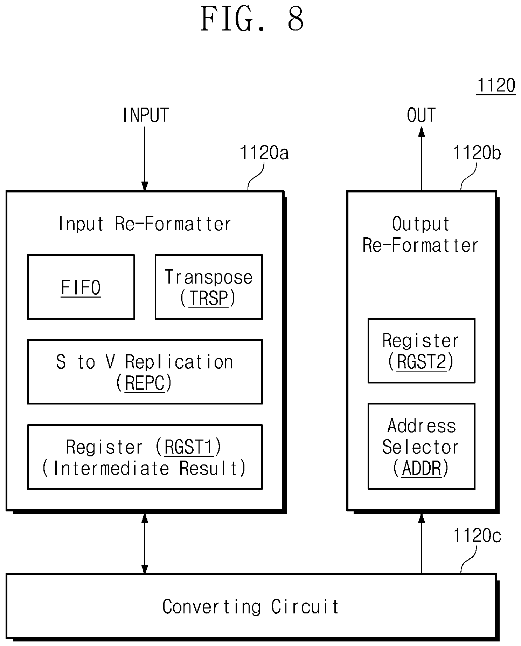

FIG. 8 is a block diagram illustrating one of a plurality of quantization cores of FIG. 7. For convenience of description, the zeroth quantization core 1120 is described with reference to FIG. 8, but the scope of the present disclosure is not limited thereto, and other quantization cores 1121 to 112n may also have a structure similar to that of the zeroth quantization core 1120.

Referring to FIG. 8, the quantization core 1120 may include an input re-formatter 1120a, an output re-formatter 1120b, and a converting circuit 1120c. The input re-formatter 1120a may be configured to receive input data INPUT (e.g., from the round robin switch 1110) and to change a format of the received input data INPUT. In at least one embodiment, the input data INPUT may be the computation result data RST generated by the processing element 1200. The input data INPUT may include a plurality of pieces of computation result data RST. The number of the plurality of pieces of computation result data RST included in one input data INPUT may be the number of data that may be quantized through one quantization in the quantization core 1120.

The input re-formatter 1120a may include a first-in-first-out unit FIFO, a transpose (e.g. a transposer or transpose unit) TRSP, a scalar-vector replication unit REPC, and a first register RGST1. The first-in-first-out unit FIFO may be configured to perform first-in-first-out (e.g. first-in-first-out access or buffering) on the input data INPUT received from the round robin switch 1110. The transpose TRSP may be configured to calculate a transpose with respect to the input data INPUT. For example, when the input data INPUT is in the form of a vector consisting of 1 row and 4 columns, the transpose TRSP may perform the transpose on the input data INPUT to generate transpose data consisting of 4 rows and 1 column. The scalar-vector replication unit REPC may replicate the input data INPUT, which is a scalar value, and may convert it into a vector value. The first register RGST1 may be configured to store a value, data, and/or vector generated by the input re-formatter 1120a and/or an intermediate value generated by the converting circuit 1120c. Each of the first-in-first-out unit FIFO, the transpose TRSP, the scalar-vector replication unit REPC, and/or the first register RGST1 may communicate with any or all other elements described with reference to the input re-formatter 1120a. For example, each of the first-in-first-out unit FIFO, the transpose TRSP, the scalar-vector replication unit REPC, and/or the first register RGST1 may engage in one-way and/or two-way and/or broadcast communication with each other to transfer and/or exchange and/or receive information such as but not limited to data and/or commands, in a manner such as in a serial and/or parallel manner. The information may be in encoded various formats, such as in an analog format and/or in a digital format.

The output re-formatter 1120b may be configured to store the result (e.g., quantization result data) converted by the converting circuit 1120c, and to output the converted result (e.g., the output data OUT) to the round robin switch 1110. In at least one embodiment, the output data OUT may include a plurality of quantized data. Each of the plurality of quantized data may be data in which the plurality of computation result data RST are quantized.

The output re-formatter 1120b may include a second register RGST2 and an address selector ADDR. The second register RGST2 may be configured to store the output data OUT. The address selector ADDR may select and/or control the address of the second register RGST2 such that the output data OUT stored in the second register RGST2 is output to the round robin switch 1110. As such, the second register RGST2 may communicate with address selector ADDR. For example, the second register RGST2 and the address selector ADDR may engage in one-way and/or two-way and/or broadcast communication with each other to transfer and/or exchange and/or receive information such as but not limited to data and/or commands.

The converting circuit 1120c may receive the input data INPUT and/or transformed input data INPUT from the input re-formatter 1120a and may perform various computations on the transformed input data INPUT. In this case, various computations may include computations for quantization with respect to the input data INPUT and/or the transformed input data INPUT. The intermediate data generated during the computation of the converting circuit 1120c may be stored in the first register RGST1 of the input re-formatter 1120a. When quantization is completed by the converting circuit 1120c, the converting circuit 1120c may provide the output data OUT to the output re-formatter 1120b.

In at least one embodiment, the converting circuit 1120c may include various computation modules to support various quantization algorithms. The converting circuit 1120c may execute various computation modules under the control of the control logic circuit 1130.

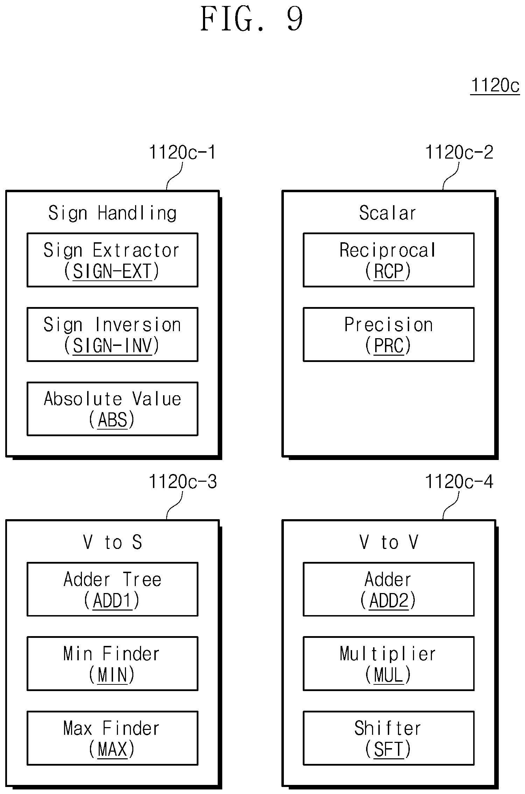

FIG. 9 is a block diagram illustrating a converting circuit of FIG. 8. Referring to FIGS. 2, 8, and 9, the converting circuit 1120c may include various computation modules to support various quantization algorithms. For example, the converting circuit 1120c may include a sign handling module 1120c-1, a scalar computation module 1120c-2, a vector-scalar computation module 1120c-3, and a vector-vector computation module 1120c-4.

The sign handling module 1120c-1 may be configured to manage a sign of the input data INPUT (or data received from the input re-formatter 1120a) and/or to perform a computation related to the sign. The sign handling module 1120c-1 may include a sign extractor SIGN-EXT, a sign inversion unit SIGN-INV, and an absolute value unit ABS.

The sign extractor SIGN-EXT may be configured to extract the sign of the input data INPUT. For example, the input data INPUT may include the plurality of computation result data RST. The sign extractor SIGN-EXT may extract the sign of each of the plurality of computation result data RST included in the input data INPUT and may generate sign data corresponding to the extracted sign. In at least one embodiment, the sign data may have the same form (e.g., vector and/or scalar) as the input data INPUT. For example, when the input data INPUT is in the vector form of [2.66 1.05 -0.07 0.65], the sign data may have the vector form of [1 1 -1 1]. The above-described sign data may each be expressed with 1 bit. (e.g., 1 when the corresponding data is positive, and 0 when the corresponding data is negative)

The sign inversion unit SIGN-INV may be configured to invert the sign of the input data INPUT. For example, the sign inversion unit SIGN-INV may invert the sign of each of the plurality of computation result data RST included in the input data INPUT to generate inverted data. As an example, if the input data INPUT is in the vector form of [2.66 1.05 -0.07 0.65], the inverted data may have the vector form of [-2.66 -1.05 0.07 -0.65].

The absolute value unit ABS may be configured to extract the absolute value of the input data INPUT. For example, the absolute value unit ABS may generate absolute value data by extracting the absolute value of each of the plurality of computation result data RST included in the input data INPUT. As an example, when the input data INPUT is in the vector form of [2.66 1.05 -0.07 0.65], the absolute value data may have the vector form of [2.66 1.05 0.07 0.65].

The scalar computation module 1120c-2 may be configured to perform a scalar computation on the input data INPUT. For example, the input data INPUT may have a vector form. In this case, the scalar computation module 1120c-2 may be configured to perform a scalar computation on one piece of data included in the input data INPUT. The scalar computation module 1120c-2 may include a reciprocal unit RCP and a precision control unit PRC.

The reciprocal unit RCP may be configured to compute the reciprocal of one piece of data included in the input data INPUT. The precision control unit PRC may change the precision of one piece of data included in the input data INPUT.

The vector-scalar computation module 1120c-3 may be configured to perform vector-scalar (e.g. vector to scalar) computation on the input data INPUT. For example, the input data INPUT may have a vector form. In this case, the vector-scalar computation module 1120c-3 may perform a vector-scalar computation on the input data INPUT to generate data in scalar form.

The vector-scalar computation module 1120c-3 may include an adder tree ADD1, a minimum value finder MIN, and a maximum value finder MAX. The adder tree ADD1 may be configured to perform addition on a plurality of data included in the input data INPUT to output addition data. For example, when the input data INPUT is [2.66 1.05 -0.07 0.65], the addition data may be 4.29. The minimum value finder MIN may be configured to search for the minimum value among a plurality of data included in the input data INPUT to output the minimum value data. For example, when the input data INPUT is [2.66 1.05 -0.07 0.65], the minimum value data may be -0.07. The maximum value finder MAX may search for the maximum value among a plurality of data included in the input data INPUT to output the maximum value data. For example, when the input data INPUT is [2.66 1.05 -0.07 0.65], the maximum value data may be 2.66.

The vector-vector computation module 1120c-4 may be configured to perform vector-vector (e.g. vector to vector) computation on the input data INPUT. For example, the input data INPUT may have a vector form. The vector-vector computation module 1120c-4 may generate vector-form data by performing vector-vector computations on the input data INPUT and other data in vector form.

The vector-vector computation module 1120c-4 may include an adder ADD2, a multiplier MUL, and a shifter SFT. The adder ADD2 may be configured to perform an addition computation on two pieces of vector data to output addition data. For example, when the two pieces of vector data are [2.66 1.05 -0.07 0.65] and [1.11 1.11 -1.11 1.11], the addition data may be [3.77 2.16 -1.18 1.76].

The multiplier MUL may be configured to perform a multiplication computation on the two pieces of vector data. In this case, the multiplier MUL may perform an inner product and/or outer product computation on the two pieces of vector data. Alternatively, the multiplier MUL may perform a scalar multiplication computation on one piece of vector data. As an example, when the one piece of vector data is [1 1 -1 1] and is multiplied by 1.11, the multiplication data may be [1.11 1.11 -1.11 1.11]. The shifter SFT may be configured to perform a shift computation on the vector data.

As described above, the converting circuit 1120c may perform various computations to quantize the input data INPUT. Each of the elements provided in the sign handling module 1120c-1, the scalar computation module 1120c-2, the vector-scalar computation module 1120c-3, and the vector-vector computation module 1120c-4 may communicate with at least one of the other elements described with reference to the sign handling module 1120c-1, the scalar computation module 1120c-2, the vector-scalar computation module 1120c-3, and the vector-vector computation module 1120c-4, respectively. For example, the sign-extractor SIGN-EXT, sign inversion unit SIGN-INV, and/or absolute value unit ABS may engage in one-way and/or two-way and/or broadcast communication with each other to transfer and/or exchange and/or receive information, and/or may engage with in one-way and/or two-way and/or broadcast communication with an element included in the scalar computation module 1120c-2, the vector-scalar computation module 1120c-3, and/or the vector-vector computation module 1120c-4. In at least one embodiment, the quantization core 1120 may perform quantization based on various quantization algorithms, and depending on the quantization algorithm being performed, the type and/or order of computation modules executed in the quantization core 1120 may vary. The control logic circuit 1130 may control each computation module of the quantization core 1120 to suit the quantization algorithm being performed.

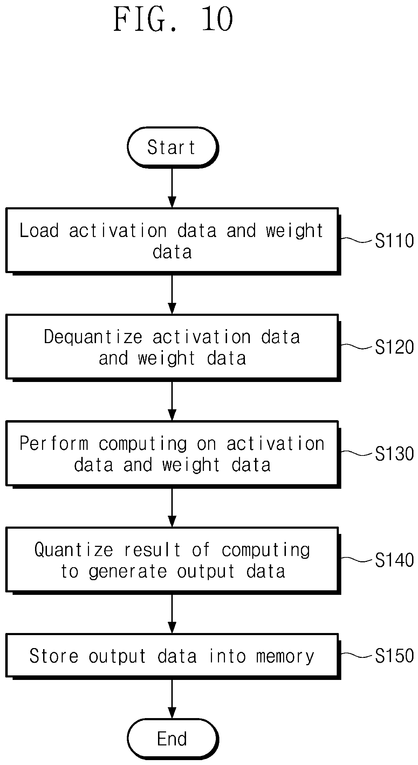

FIG. 10 is a flowchart illustrating an operation of an accelerator of FIG. 2. For convenience of description, an example in which an artificial intelligence computation is performed one-time in the accelerator 1000 is described with reference to FIG. 10. However, the embodiments are not limited thereto. For example, the accelerator 1000 may repeatedly and/or in parallel perform operations of the flowchart of FIG. 10 for inference associated with specific data, and the result data and/or output data generated by the operations of the flowchart of FIG. 10 may be used as input (e.g., the activation data ACT) in the subsequent computation process.

Referring to FIGS. 2, 6, and 10, in operation S110, the accelerator 1000 loads the activation data ACT and the weight data WT. For example, the accelerator 1000 may load the activation data ACT and the weight data WT from the memory 101.

In operation S120, the accelerator 1000 performs a de-quantization operation on the activation data ACT and the weight data WT. For example, the activation data ACT and the weight data WT loaded from the memory 101 may be of the low precision type LP. In contrast, the processing element 1200 of the accelerator 1000 may perform the MAC computation based on the high precision type HP. Therefore, in at least some of these cases, the activation data ACT and the weight data WT loaded from the memory 101 may be converted to the high precision type HP. In at least one embodiment, the high precision type HP may be BF16 type, FP16 type, and/or FP32 type.

However, in at least one embodiment, depending on the computation algorithm of the processing element 1200, operation S120 may be omitted. For example, as described below, when the quantizer 1100 performs quantization based on a BCQ (Binary-coding based Quantization) algorithm, and the processing element 1200 performs computations based on a BiQGEMM (non-GEneral Matrix to Matrix multiplication for Binary-coding based Quantized neural networks), the dequantization may be omitted. Therefore, the computation may be performed without separate conversion and/or dequantization with respect to the activation data ACT and the weight data WT.

In operation S130, the accelerator 1000 performs computations on the activation data ACT and the weight data WT. For example, the processing element 1200 of the accelerator 1000 may perform the MAC computation on the activation data ACT and the weight data WT to generate the computation result data RST. Operation S130 may also be referred to as performing a computation based on the activation data ACT and the weight data WT. In at least one embodiment, the processing element 1200 performs the MAC computation based on the high precision type HP, so the computation result data RST generated by the processing element 1200 may be the high precision type HP.

In operation S140, the accelerator 1000 may perform quantization on the computation result data RST. For example, the processing element 1200 may perform a computation based on the high precision type HP, in this case, the computation result data RST computed by the processing element 1200 may be the high precision type HP. The quantizer 1100 of the accelerator 1000 may perform quantization on the computation result data RST of the high precision type HP and may convert the quantized data into the output data OUT of the low precision type LP. In at least one embodiment, the computation result data RST may be BF16 type, FP16 type, and/or FP32 type, and the output data OUT may be INT8 and/or a combination of INT8 and FP16. In this case, the total size and/or capacity of the output data OUT may be smaller than the total size and/or capacity of the computation result data RST.

In operation S150, the accelerator 1000 may store the quantized output data OUT in the memory 101. In at least one embodiment, the output data OUT stored in the memory 101 may be used as an input (e.g., the activation data ACT) for the subsequent computation operation of the accelerator 1000.

As described above, the accelerator 1000 according to at least one embodiment of the present disclosure may perform the quantization on data (e.g., the activation data ACT, the weight data WT, and/or the computation result data RST) generated during a learning and/or inference process. In this case, since the size and/or capacity of data stored in and/or loaded from the memory 101 is reduced, the required bandwidth and/or required capacity with respect to the memory 101 may be reduced, and the power consumption used in the memory 101 may be reduced. Accordingly, the accelerator 1000 with reduced cost and improved performance is provided.

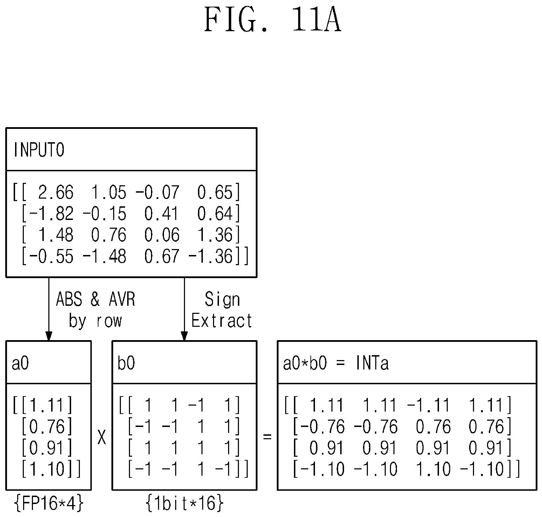

FIGS. 11A to 11C are diagrams for describing a quantization operation performed by a quantizer of FIG. 7. For convenience of description, the quantizer 1100 performs non-uniform quantization on 16 FP16 type data; however, as noted above, the embodiments are not limited thereto. More specifically, the quantization techniques described with reference to FIGS. 11A to 11C are only an example, and the scope of the present disclosure is not limited thereto. The quantizer 1100 of the accelerator 1000 according to the present disclosure may perform quantization based on various quantization algorithms.

First, referring to FIGS. 2, 7, 8, 9, 11A, 11B, and 11C, sixteen (16) result data may be generated by the computation operation of the processing element 1200. Each of the 16 result data may be of FP16 type. The 16 result data may be input to the quantizer 1100. The round robin switch 1110 of the quantizer 1100 may provide 16 result data as zeroth input data INPUTO to the zeroth quantization core 1120.

First, referring to FIG. 11A, the zeroth input data INPUTO including 16 result data may be aligned in a vector form as illustrated in FIG. 11A by the input re-formatter 1120a. For example, the scalar-vector replication unit REPC of the input re-formatter 1120a may align the 16 result data in vector form like the zeroth input data INPUTO illustrated in FIG. 11A. The zeroth input data INPUTO may be temporarily stored in the first register RGST1 of the input re-formatter 1120a.

Afterwards, the converting circuit 1120c may perform a quantization computation on the zeroth input data INPUT0. As an example, the converting circuit 1120c may perform an absolute value computation and an average computation on the zeroth input data INPUTO in units of rows to generate zeroth average data a0. For example, the absolute value unit ABS of the sign handling module 1120c-1 of the converting circuit 1120c may perform an absolute value computation on the zeroth input data INPUTO to generate absolute value data. Afterwards, the adder tree ADD1 of the vector-scalar computation module 1120c-3 of the converting circuit 1120c may perform an addition computation on the absolute value data in units of rows to generate addition data. Afterwards, the multiplier MUL of the vector-vector computation module 1120c-4 of the converting circuit 1120c may perform a division computation on the addition data by the number of elements in each row of the zeroth input data INPUT0, to generate an average value for each row. The average value for each row may be stored in the first register RGST1 of the input re-formatter 1120a. The scalar-vector replication unit REPC of the input re-formatter 1120a may copy the average values for each row to generate the zeroth average data a0 in the form of a vector. The zeroth average data a0 may be stored in the first register RGST1 of the input re-formatter 1120a.

In at least one embodiment, the zeroth average data a0 may include four pieces of data. In this case, each of the four pieces of data included in the zeroth average data a0 may be temporarily stored in the first register RGST1 of the input re-formatter 1120a in the form of FP16 type. In detail, the zeroth average data a0 may have a size of 16*4 = 64 bits.

The converting circuit 1120c may perform sign extraction on the zeroth input data INPUTO to generate zeroth sign data b0. For example, the sign extractor SIGN-EXT of the sign handling module 1120c-1 of the converting circuit 1120c may perform sign extraction on the zeroth input data INPUTO to generate the zeroth sign data b0 in the form of a vector.

In at least one embodiment, the zeroth sign data b0 may include 16 pieces of data. In this case, since the 16 pieces of data of the zeroth sign data b0 represent positive and/or negative numbers, each of the 16 pieces of data may be 1 bit (e.g., 1 and/or 0) and may be temporarily stored in the first register RGST1 of the input re-formatter 1120a. In detail, the zeroth sign data b0 may have a size of 16*1 = 16 bits.

The converting circuit 1120c may generate a-th intermediate data INTa by performing multiplication on the zeroth average data a0 and the zeroth sign data b0. For example, the multiplier MUL of the vector-vector computation module 1120c-4 of the converting circuit 1120c may perform a scalar multiplication on elements of the zeroth average data a0 and rows of the zeroth sign data b0 to generate the a-th intermediate data INTa. In detail, the a-th intermediate data INTa is expressed as the product of the zeroth average data a0 and the zeroth sign data b0, so the a-th intermediate data INTa may be generated when the zeroth average data a0 and the zeroth sign data b0 are stored in the first register RGST1 of the input re-formatter 1120a.

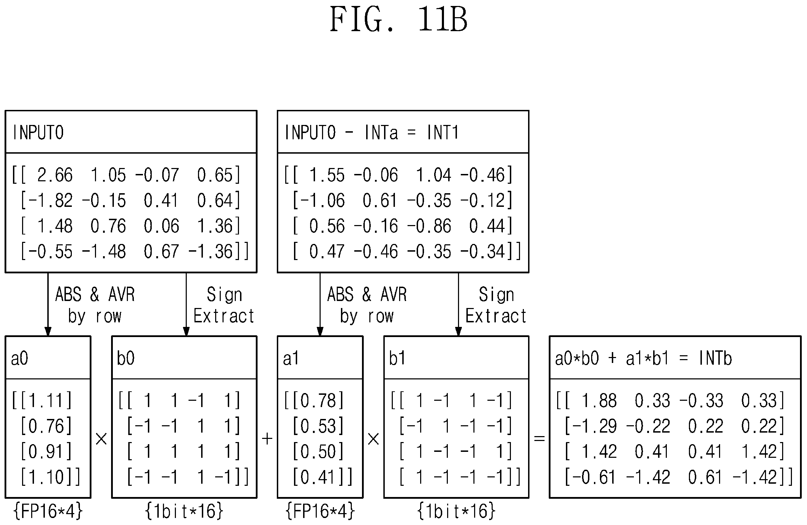

Next, as illustrated in FIG. 11B, the converting circuit 1120c may perform a subtraction operation on the zeroth input data INPUTO and the a-th intermediate data INTa to generate first intermediate data INT1. That is, the converting circuit 1120c may subtract the a-th intermediate data INTa from the zeroth input data INPUTO to generate first intermediate data INT1. For example, the sign inversion unit SIGN-INV of the sign handling module 1120c-1 of the converting circuit 1120c may perform sign inversion on the a-th intermediate data INTa to generate inverted data. Afterwards, the adder ADD2 of the vector-vector computation module 1120c-4 of the converting circuit 1120c may perform addition on the zeroth input data INPUTO and the inverted data to generate the first intermediate data INT1.

Afterwards, the converting circuit 1120c may perform row-wise absolute value computation and average computation on the first intermediate data INT1 to generate first average data a1, and may generate first sign data b1 by performing sign extraction on the first intermediate data INT1.

As described with reference to FIG. 11A, the row-wise absolute value computation and average computation may be performed by the absolute value unit ABS of the sign handling module 1120c-1, the adder tree ADD1 of the vector-scalar computation module 1120c-3, and the multiplier MUL of the vector-vector computation module 1120c-4, and the sign extraction operation may be performed by the sign extractor SIGN-EXT of the sign handling module 1120c-1. A detailed description thereof will be omitted to avoid redundancy.

Similar to the method described with reference to FIG. 11A, the first average data a1 may include four pieces of data, and each of the four pieces of data may be temporarily stored in the first register RGST1 of the input re-formatter 1120a in the form of FP16 type. In detail, the first average data a1 may have a size of 16*4 = 64 bits.

Similar to the method described with reference to FIG. 11A, the first sign data b1 may include 16 data, and the 16 data represent positive and/or negative numbers, so each of the 16 data may be 1 bit (e.g., 1 or 0) and may be temporarily stored in the first register RGST1 of the input re-formatter 1120a. In detail, the first sign data b1 may have a size of 16*1 = 16 bits.

The converting circuit 1120c may compute the sum of a multiplication result (e.g., a0*b0) of the zeroth average data a0 and the zeroth sign data b0 and a multiplication result (e.g., a1*b1) of the first average data a1 and the first sign data b1 to generate b-th intermediate data INTb. As described with reference to FIG. 11A, multiplication of each data may be performed by the multiplier MUL of the vector-vector computation module 1120c-4. An addition operation (e.g., a0*b0+a1*b1) on the multiplication results may be performed by the adder ADD2 of the vector-vector computation module 1120c-4.

As illustrated in FIG. 11B, the b-th intermediate data INTb may be expressed as a0*b0+a1*b 1, so the b-th intermediate data INTb may be generated when the zeroth average data a0, the zeroth sign data b0, the first average data a1, and the first sign data b1 are stored in the first register RGST1 of the input re-formatter 1120a. In detail, the b-th intermediate data INTb may be expressed using 16*4+1*16+16*4+1*16=160 bits.

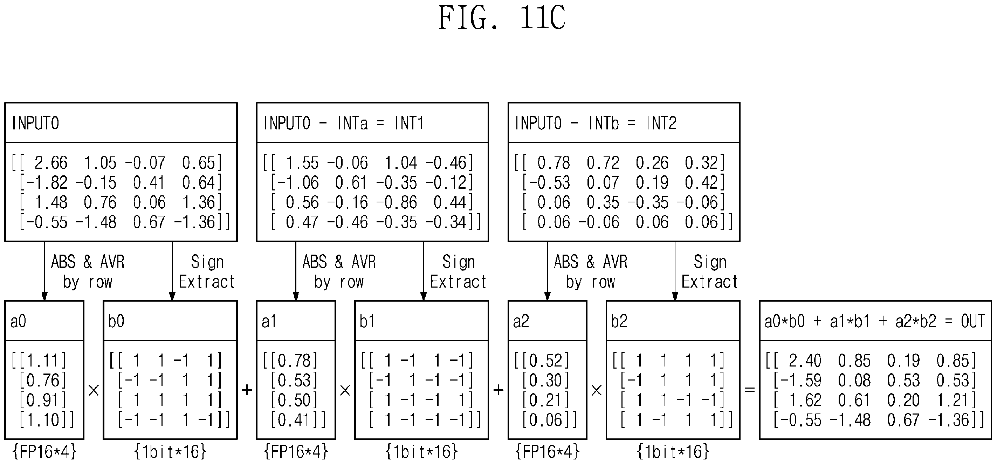

Next, as illustrated in FIG. 11C, the converting circuit 1120c may perform a subtraction operation on the zeroth input data INPUTO and the b-th intermediate data INTb to generate second intermediate data INT2. Afterwards, the converting circuit 1120c may perform row-wise absolute value computation and average computation on the second intermediate data INT2 to generate second average data a2, and may generate second sign data b2 by performing sign extraction on the second intermediate data INT2.

As described with reference to FIGS. 11A and 11B, the subtraction operation may be performed by the sign inversion unit SIGN-INV of the sign handling module 1120c-1 and the adder ADD2 of the vector-vector computation module 1120c-4, the row-wise absolute value computation and average computation may be performed by the absolute value unit ABS of the sign handling module 1120c-1, the adder tree ADD1 of the vector-scalar computation module 1120c-3, and the multiplier MUL of the vector-vector computation module 1120c-4, the sign extraction operation may be performed by the sign extractor SIGN-EXT of the sign handling module 1120c-1, and additional descriptions thereof are omitted to avoid redundancy.

The converting circuit 1120c may generate the output data OUT by performing the addition (e.g., a0*b0+a1*b1+a2*b2) on the multiplication (e.g., a0*b0) of the zeroth average data a0 and the zeroth sign data b0, the multiplication (e.g., a1*b1) of the first average data a1 and the first sign data b1, and the multiplication (e.g., a2*b2) of the second average data a2 and the second sign data b2.

As illustrated in FIG. 11C, the output data OUT is expressed as a0*b0+a1*b1+a2*b2. In detail, the output data OUT is expressed through the zeroth average data a0, the zeroth sign data b0, the first average data a1, the first sign data b1, the second average data a2, and the second sign data b2, and for this, a total capacity of 3*(16*4+1*16)=240 bits is required.

In at least one embodiment, as the above-described computation is repeatedly performed, the error compared to the zeroth input data INPUTO may be reduced. For example, a mean square error MSEa for the zeroth input data of the a-th intermediate data INTa may be greater than a mean square error MSEb for the zeroth input data of the b-th intermediate data INTb, and the mean square error MSEb for the zeroth input data of the b-th intermediate data INTb may be greater than a mean square error MSEc for the zeroth input data of the output data OUT.

In at least one embodiment, through the above-described quantization, some errors occur in the output data OUT compared to the zeroth input data INPUTO (e.g., original data), but the overall data capacity is reduced. For example, the zeroth input data INPUTO includes 16 pieces of FP16 data. In detail, the zeroth input data INPUTO has a capacity of 16*16=256 bits. In contrast, when the above-described quantization operation is performed, the output data OUT has a capacity of 3*(16*4+1*16)=240 bits. Accordingly, as the computation result and/or the activation data ACT generated during the inference process of the accelerator 1000 is quantized, the bandwidth and capacity required for the memory 101 may be reduced.

In at least one embodiment, the quantization method illustrated in FIGS. 11A to 11C may be a binary coding based quantization (BCQ). In this case, the output data OUT may be expressed through multiplication and addition of average data and sign data, and later, when the output data OUT is used as an input for the subsequent artificial intelligence computation, it may be computed concisely through a BiQGEMM (non-GEneral Matrix to Matrix multiplication for Binary-coding based Quantized neural networks). In at least one embodiment, the computation result by the BiQGEMM may have the high precision type HP (e.g., BF16, FP16, FP32, etc.), and the quantizer 1100 may perform quantization in the same manner as described above with respect to the computation result.

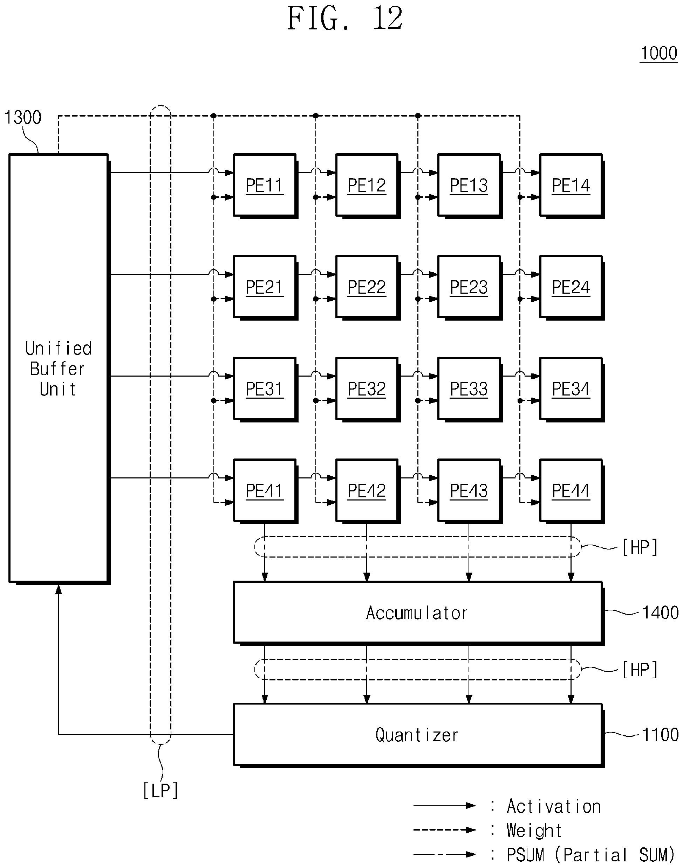

FIG. 12 is a block diagram illustrating an accelerator of FIG. 2. Referring to FIGS. 2 and 12, the accelerator 1000 may include the quantizer 1100, a unified buffer unit 1300, a plurality of processing elements PE11 to PE44, and an accumulator 1400.

The unified buffer unit 1300 may be configured to store various data, weights, and/or parameters for artificial intelligence computations to be performed in the accelerator 1000. In at least one embodiment, various data, weights, and/or parameters stored in the unified buffer unit 1300 may be provided from the memory 101 of FIG. 2 and/or may be obtained from computation results of the plurality of processing elements PE11 to PE44 of the accelerator 1000. In at least one embodiment, information stored in the unified buffer unit 1300 may have the low precision type LP.

The plurality of processing elements PE11 to PE44 may perform the artificial intelligence computations and/or the MAC computations based on data provided from the unified buffer unit 1300. For example, each of the plurality of processing elements PE11 to PE44 may receive the activation data ACT and the weight data WT from the unified buffer unit 1300, and may output partial sum data PSUM by performing the artificial intelligence computation and/or the MAC computation on the received activation data ACT and the weight data WT.

The accumulator 1400 may be configured to accumulate the partial sum data PSUM of each of the plurality of processing elements PE11 to PE44. The output of the accumulator 1400 may be provided to the quantizer 1100 as the computation result data RST.

The quantizer 1100 may perform quantization on the computation result data RST received from the accumulator 1400 to generate the output data OUT. The output data OUT may be stored in the unified buffer unit 1300. In at least one embodiment, the output data OUT stored in the unified buffer unit 1300 may be reused as the activation data ACT with respect to the plurality of processing elements PE11 to PE44.

In at least one embodiment, the plurality of processing elements PE11 to PE44 and the accumulator 1400 may perform computations based on the high precision type HP (e.g., BF16, FP16, FP32, etc.). In this case, the partial sum data PSUM output from the plurality of processing elements PE11 to PE44 and the computation result data RST output from the accumulator 1400 will have the high precision type HP. In contrast, the quantizer 1100 performs quantization on the computation result data RST to generate the output data OUT, and the generated output data OUT is stored in the unified buffer unit 1300. In detail, the quantizer 1100 performs quantization on intermediate data generated during the inference operation of the accelerator 1000. In this case, since a relatively small amount of data is stored in the unified buffer unit 1300 and/or output from the unified buffer unit 1300, the required capacity and the required bandwidth of the unified buffer unit 1300 may be reduced, and power consumption used by the unified buffer unit 1300 may be reduced.

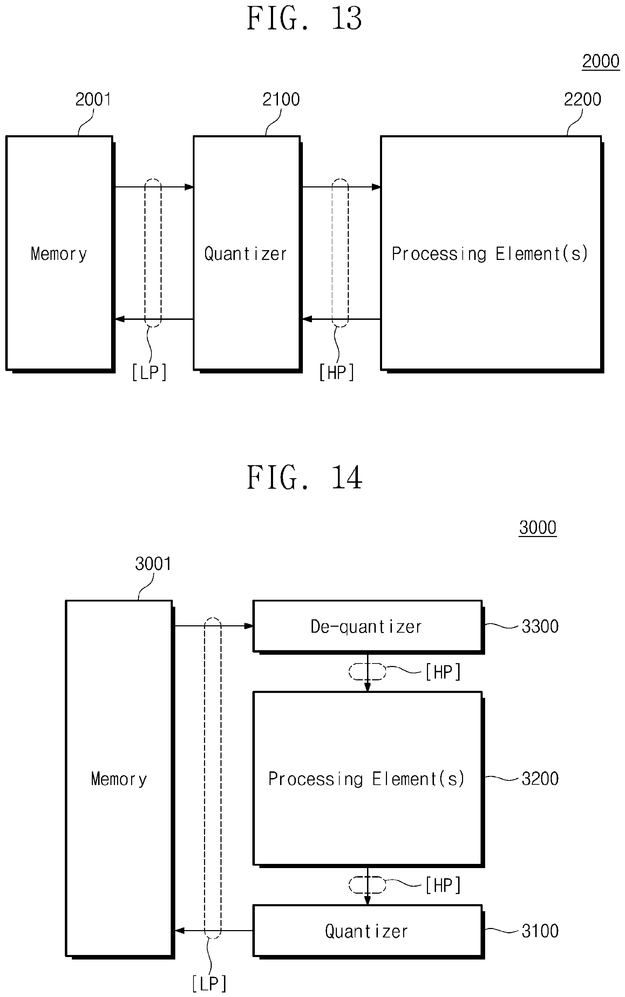

FIG. 13 is a diagram illustrating a structure of an accelerator, according to at least one embodiment of the present disclosure. For brevity of drawings and convenience of description, only some components related to at least one embodiment of the present disclosure are illustrated in FIG. 13.

Referring to FIG. 13, an accelerator 2000 may include a memory 2001, a quantizer 2100, and a processing element 2200. The memory 2001 may be configured to store various data, weights, parameters, etc. required for artificial intelligence computations.

The quantizer 2100 may be located in a path between the memory 2001 and the processing element 2200. The quantizer 2100 may perform dequantization on data received from the memory 2001 and/or quantization on data received from the processing element 2200. For example, the processing element 2200 may perform artificial intelligence computations based on the high precision type HP. In detail, the processing element 2200 may perform the MAC computation on data of the high precision type HP and may output result data of the high precision type HP. In contrast, the data stored in the memory 2001 may have the low precision type LP. Accordingly, the quantizer 2100 may quantize the high precision type HP data received from the processing element 2200 into the low precision type LP data. Alternatively, the quantizer 2100 may dequantize the low precision type LP data received from the memory 2001 into the high precision type HP data.

In at least one embodiment, the quantizer 2100 may have a structure the same as and/or substantially similar to the quantizer 1100 described with reference to FIGS. 7 to 9 and may be controlled in various ways depending on various quantization and/or dequantization algorithms.

FIG. 14 is a diagram illustrating a structure of an accelerator, according to at least one embodiment of the present disclosure. For brevity of drawings and convenience of description, only some components related to at least one embodiment of the present disclosure are illustrated in FIG. 14.

Referring to FIG. 14, an accelerator 3000 may include a memory 3001, a quantizer 3100, a processing element 3200, and a de-quantizer 3300. Since the memory 3001 and the processing element 3200 are the same as and/or substantially similar to those described with reference to FIG. 13, additional descriptions thereof is omitted to avoid redundancy.

The quantizer 3100 may quantize the computation result data RST of the high precision type HP generated by the processing element 3200 to generate the output data OUT of the low precision type LP. The output data OUT may be stored in the memory 3001. The de-quantizer 3300 may dequantize the data of the low precision type LP received from the memory 3001 to generate data (e.g., activation data and/or weights, etc.) of the high precision type HP. The generated high precision type data may be provided to the processing element 3200.

Referring to FIG. 13 and 14, some structures of the accelerators 2000 and 3000 are described, but the scope of the present disclosure is not limited thereto. In at least one embodiment, data of the low precision type LP may be generated by the quantizer of the accelerator. In this case, the processing element of the accelerator may perform computation on the low precision type data to generate high precision type result data. For example, the quantizer may generate the low precision type data based on the BCQ, and the processing element of the accelerator may perform computations on the low precision type data based on the BiQGEMM (non-GEneral Matrix to Matrix multiplication for Binary-coding based Quantized neural networks). In this case, separate dequantization may not be performed inside the accelerator.

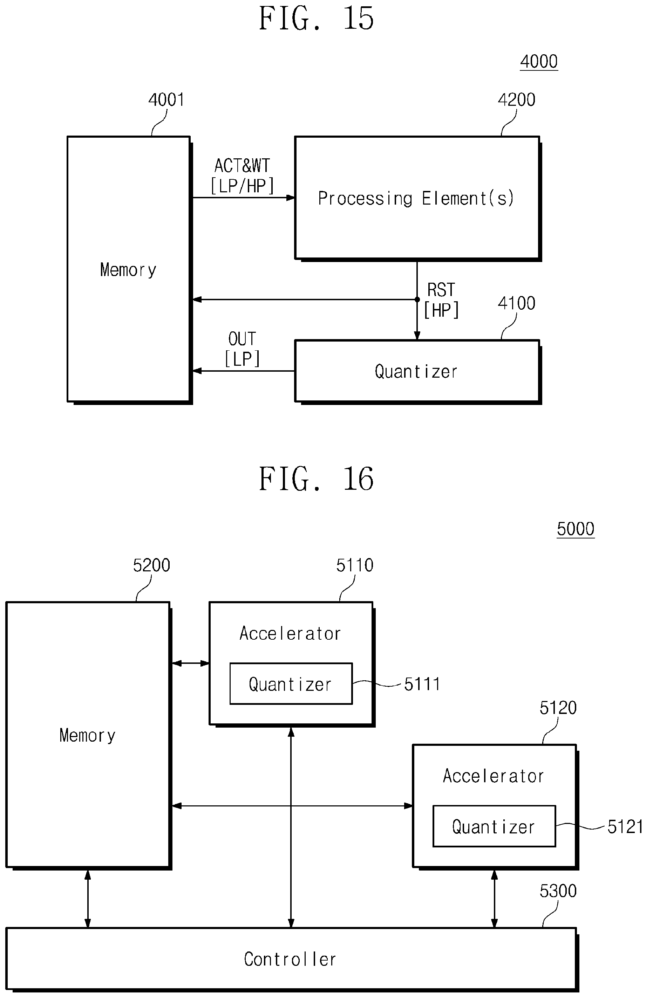

FIG. 15 is a block diagram illustrating a structure of an accelerator, according to at least one embodiment of the present disclosure. Referring to FIG. 15, an accelerator 4000 may include a memory 4001, a quantizer 4100, and a processing element 4200. Since the memory 4001, the quantizer 4100, and the processing element 4200 are the same as and/or substantially similar to those described with reference to FIG. 2, additional description thereof is omitted to avoid redundancy.

In at least one embodiment, the accelerator 4000 may perform computations on a plurality of layers to perform learning and/or inference on an artificial intelligence model. In this case, different computation methods may be applied depending on the operation characteristics and/or reliability of each of the plurality of layers. For example, for some of the plurality of layers, the amount of computation may be relatively large, and for some other layers, the amount of computation may be relatively small. Alternatively, for some of the plurality of layers, computation accuracy may be important, and for some other layers, computation speed may be important. In this case, depending on the characteristics of the subsequent layer, the accelerator 4000 may quantize the computation result data RST so as to be stored in the memory 4001, and/or may omit quantization and may store the computation result data RST in the memory 4001.

For example, when the subsequent layer to be computed by the accelerator 4000 requires a large amount of computation and a fast computation speed, the quantizer 4100 may quantize the computation result data RST so as to be stored in the memory 4001. In this case, since the size of data stored in the memory 4001 is reduced, fast memory access is possible. In contrast, when the subsequent layer to be computed by the accelerator 4000 requires a small amount of computation and accurate computation, the accelerator 4000 may omit quantization and may store the computation result data RST (e.g., the high precision type HP) in the memory 4001. In this case, since the precision of the data stored in the memory 4001 is high, relatively accurate computations may be possible.

FIG. 16 is a block diagram illustrating a system according to at least one embodiment of the present disclosure. Referring to FIG. 16, a system 5000 may include a first accelerator 5110, a second accelerator 5120, a memory 5200, and a controller 5300. Since the memory 5200 and the controller 5300 are the same as and/or substantially to those described with reference to FIG. 2, additional description thereof will be omitted to avoid redundancy.

The system 5000 may be dedicated hardware configured to perform processing of artificial intelligence models. In at least one embodiment, the first accelerator 5110 and the second accelerator 5120 of the system 5000 may perform computations in parallel to process a large artificial intelligence model. For example, the first accelerator 5110 and the second accelerator 5120 may process the large artificial intelligence model in parallel and/or independently through data parallelism, model parallelism, and/or tensor parallelism. In at least one embodiment, the first accelerator 5110 and the second accelerator 5120 may operate based on the operation method and/or computation method described with reference to FIGS. 1 to 15. For example, the first accelerator 5110 may include a first quantizer 5111, and the second accelerator 5210 may include a second quantizer 5121. Each of the first quantizer 5111 and the second quantizer 5121 may be the quantizer described with reference to FIGS. 1 to 15 and/or may operate based on the methods described with reference to FIGS. 1 to 15. For example, the first quantizer 5111 may quantize the result data generated by the artificial intelligence computation of the first accelerator 5110 to generate first output data, and the first output data may be stored in the memory 5200. The second quantizer 5121 may generate second output data by quantizing the result data generated by the artificial intelligence computation of the second accelerator 5120, and the second output data may be stored in the memory 5200. Each of the first and second output data stored in the memory 5200 may be provided to the first accelerator 5110 and/or the second accelerator 5120 for subsequent artificial intelligence computation.

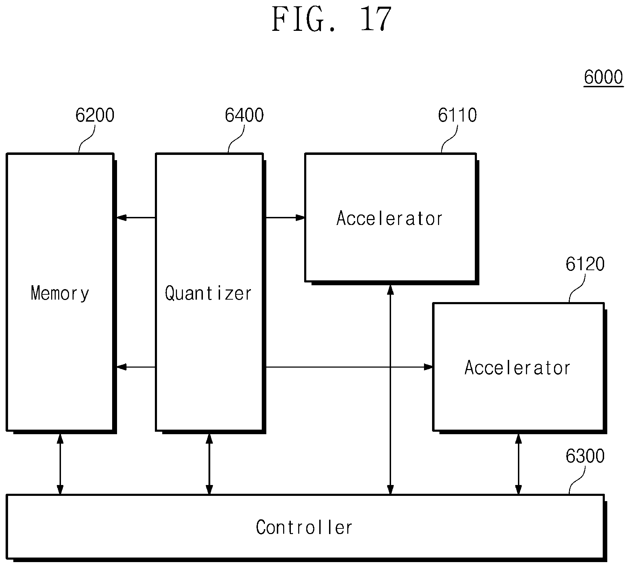

FIG. 17 is a block diagram illustrating a system according to at least one embodiment of the present disclosure. Referring to FIG. 17, a system 6000 may include a first accelerator 6110, a second accelerator 6120, a memory 6200, a controller 6300, and a quantizer 6400. Since the memory 6200 and the controller 6300 are the same as and/or substantially to those described with reference to FIG. 2, additional description thereof will be omitted to avoid redundancy. Since the first accelerator 6110, the second accelerator 6120, the memory 6200, and the controller 6300 are described with reference to FIG. 16, additional description thereof will be omitted to avoid redundancy.

In at least one embodiment, the system 6000 may include the quantizer 6400. The quantizer 6400 may perform quantization on the computation result data RST generated from the first accelerator 6110 and the second accelerator 6120 to generate the output data. The generated output data may be stored in the memory 6200. In at least one embodiment, since the configuration, structure, and operating method of the quantizer 6400 are similar to those described with reference to FIGS. 1 to 16, except that the quantizer 6400 exists outside the accelerators 6110 and 6120, additional description thereof will be omitted to avoid redundancy.

As described above, according to the present disclosure, an accelerator may include a quantizer configured to quantize the result data. In this case, the quantizer may perform quantization on computation result data and/or computation intermediate data generated during artificial intelligence computation, learning, inference, etc. of the accelerator, thereby reducing the capacity of data accessed from the memory. Accordingly, the bandwidth and/or the power consumption required for the memory may be reduced.

According to at least one embodiment of the present disclosure, the accelerator may perform computations on an artificial intelligence model. In this case, the accelerator may include a quantizer configured to perform a quantization on various data generated during learning and/or inference of an accelerator. Therefore, since the capacity for various data (e.g., activation data, weight data, etc.) generated during learning and/or inference of the accelerator is reduced, the required bandwidth and the required capacity with respect to the memory configured to store and/or load various data may be decreased. Accordingly, an accelerator configured to perform artificial intelligence computations with reduced cost and improved performance, a method of operating the accelerator, and an artificial intelligence system including the accelerator are provided.

Embodiments are set out in the following Clauses:
Clause 1. A method of operating an accelerator configured to perform an artificial intelligence (AI) operation, the method comprising:
   loading first activation data and first weight data from a memory;
   generating first result data by performing a first operation based on the first activation data and the first weight data;
   performing a quantization on the first result data to generate first output data; and storing the first output data in the memory, and
   wherein the first activation data, the first weight data, and the first output data are of a low precision type, and the first result data is of a high precision type.
Clause 2. The method of Clause 1, wherein a size of the first output data is less than that of the first result data.
Clause 3. The method of Clause 1 or Clause 2, wherein the high precision type includes at least one of a BF16 (Brain Floating Point Format) type, an FP16 (half-precision IEEE Floating Point Format) type, an FP32 (Single-precision floating-point format), or an FP64 (Double-precision floating-point format) type, and
   wherein the low precision type includes at least one of an integer type with width 4 (INT4 type), an INT8 type, or an INT16 type.
Clause 4. The method of any of Clauses 1-3, further comprising:
   loading the first output data and second weight data from the memory;
   generating second result data by performing a second operation based on the first output data and the second weight data;
   generating a second output data by performing the quantization on the second result data; and
   storing the second output data in the memory,
   wherein the second output data is of the low precision type, and the second result data is of the high precision type.
Clause 5. An artificial intelligence system comprising:
   a memory configured to store data;
   an accelerator configured to load first activation data and first weight data from the memory, to generate first result data by performing a first operation based on the first activation data and the first weight data, and to generate first output data by performing a quantization on the first result data; and
   a Central Processing Unit (CPU) configured to control the memory and the accelerator, and
   wherein the first activation data, the first weight data, and the first output data are of a low precision type, and the first result data is of a high precision type, and
   wherein the first output data is stored in the memory.
Clause 6. The artificial intelligence system of Clause 5, wherein a size of the first output data is less than that of the first result data.
Clause 7. The artificial intelligence system of Clause 5 or Clause 6, wherein the CPU is further configured to quantize the first weight data.

The above descriptions are detail embodiments for carrying out the present disclosure. Embodiments in which a design is changed simply and/or which are easily changed may be included in the present disclosure as well as at least one embodiment described above. In addition, technologies that are easily changed and implemented by using the above embodiments may be included in the present disclosure. Therefore, the scope of the present disclosure should not be limited to the above-described embodiments and should be defined by not only the claims to be described later, but also those equivalent to the claims of the present disclosure.

## Claims

1. An accelerator configured to perform an artificial intelligence operation, the accelerator comprising:
a processing element configured to generate first result data by performing a first operation based on first activation data and first weight data loaded from a memory; and
a quantizer configured to generate first output data by performing a quantization on the first result data,
wherein the first activation data, the first weight data, and the first output data are of a low precision type, and the first result data is of a high precision type, and
wherein the accelerator is configured to enable the first output data to be stored in the memory.

2. The accelerator of claim 1, wherein a size of the first output data is less than that of the first result data.

3. The accelerator of claim 1 or claim 2, wherein the high precision type includes at least one of a brain floating point format type, a half-precision IEEE floating point format type, a single-precision floating-point format, or a double-precision floating-point format type, and
wherein the low precision type includes at least one of an integer type with width 4, an integer type with width 8, or an integer type with width 16.

4. The accelerator of any preceding claim, wherein the first operation includes a multiply and accumulate operation on the first activation data and the first weight data.

5. The accelerator of any preceding claim, wherein the quantizer includes:
a round robin switch configured to receive the first result data;
a plurality of quantization cores configured to generate the first output data by performing the quantization on the first result data received from the round robin switch; and
a control logic circuit configured to control each of the plurality of quantization cores, and
wherein the round robin switch is further configured to transmit the first output data generated by the plurality of quantization cores to the memory.

6. The accelerator of claim 5, wherein the plurality of quantization cores is configured to perform the quantization in parallel.

7. The accelerator of claim 5 or claim 6, wherein each of the plurality of quantization cores includes:
an input re-formatter configured to change a format of the first result data received from the round robin switch and to store an intermediate result;
a converting circuit configured to generate the first result data by performing a computation on input data received from the input re-formatter; and
an output re-formatter configured to store the first result data generated from the converting circuit and to output the first result data to the round robin switch.

8. The accelerator of claim 7, wherein the converting circuit includes processing circuitry configured to:
manage a sign of the input data;
perform a scalar computation on the input data;
perform a vector-scalar computation on the input data; and
perform a vector-vector computation on the input data.

9. The accelerator of claim 7 or claim 8, wherein the control logic circuit is configured to sequentially control the input re-formatter, the output re-formatter, and the converting circuit of each of the plurality of quantization cores, based on a quantization algorithm to be performed in each of the plurality of quantization cores.

10. The accelerator of any preceding claim, wherein the quantizer is configured to perform the quantization based on a Binary Coding based Quantization.

11. The accelerator of any preceding claim, wherein the processing element is further configured to generate second result data by performing a second computation on the first output data and second weight data loaded from the memory.

12. The accelerator of claim 11, wherein the quantizer is further configured to perform the quantization on the second result data to generate second output data, and
wherein the accelerator is configured to enable the second output data to be stored in the memory.

13. The accelerator of claim 11, further configured to enable the second result data to be stored in the memory without performing the quantization on the second result data.

14. A method of operating an accelerator configured to perform an artificial intelligence operation, the method comprising:
loading first activation data and first weight data from a memory;
generating first result data by performing a first operation based on the first activation data and the first weight data;
performing a quantization on the first result data to generate first output data; and
storing the first output data in the memory, and
wherein the first activation data, the first weight data, and the first output data are of a low precision type, and the first result data is of a high precision type.

15. The method of claim 14, wherein a size of the first output data is less than that of the first result data.
